# EUROPÄISCHE PATENTSCHRIFT

(11) **EP 2 052 056 B1**
(45) Veröffentlichungstag und Bekanntmachung des Hinweises auf die Patenterteilung: **19.06.2013**
(21) Anmeldenummer: 07801194.7
(22) Anmeldetag: 31.07.2007
(51) Int. Cl.: C10C 3/00, E01C 19/10

(54) **VERFAHREN ZUR WIEDERVERWENDUNG VON AUSBAUASPHALTEN UND HERSTELLUNG VON ASPHALTMISCHGUT**
METHOD FOR REUSING RECLAIMED ASPHALT AND PRODUCING MIXED ASPHALT MATERIAL
PROCÉDÉ DE RÉUTILISATION DE MATÉRIAUX BITUMINEUX DE DÉMOLITION DES ROUTES ET PRODUCTION D'ENROBÉS BITUMINEUX

(30) Priorität: 17.08.2006 DE 102006038614
(43) Veröffentlichungstag der Anmeldung: 29.04.2009
(73) Patentinhaber: Sasol Wax GmbH, 20457 Hamburg (DE); DEUTAG GmbH & Co. KG, 53545 Linz am Rhein (DE); Winkelmann, Friedrich, 21509 Glinde (DE)
(72) Erfinder: WINKELMANN, Friedrich, 21509 Glinde (DE); NÖLTING, Matthias, 22589 Hamburg (DE); RIEBESEHL, Gerhard, 21039 Escheburg (DE)
(74) Vertreter: Kassner, Klaus
(86) Internationale Anmeldenummer: PCT/DE2007/001356
(87) Internationale Veröffentlichungsnummer: WO 2008/019648

(56) Entgegenhaltungen:
- WO-A-99/11737
- DE-A1-102004 055 474

## Beschreibung

### Technisches Gebiet

Die Erfindung betrifft ein Verfahren zur Wiederverwendung von Ausbauasphalt und die Herstellung von neuem Asphaltmischgut, wie Asphaltwarm- oder Asphaltheißmischgut, unter Verwendung von mindestens zuzugebenden Anteilen von Ausbauasphalt.

Im Sinne der Erfindung werden unter Ausbauasphalte, auch Recyclingasphalte genannt, alle aus z.B. durch Fräsen oder Schollenaufbruch von bituminösen Straßendecken gewonnene Güter verstanden, die mindestens wiederverwendbare Bestandteile von Bitumen und Gesteinen enthalten, und z.B. als Granulate für die Wiederverwendung aufbereitet sind. Derartige Aufbereitungsmethoden von Ausbauasphalt zu Granulaten sind z.B. in der US 5,626,659 und DE 44 07 822 C2 beschrieben.

Unter Asphalte, wie auch Asphaltwarm- oder Asphaltheißmischgüter, versteht die Erfindung sämtliche Mischgüter, die Anteile von Bitumen und Mineralstoffen sowie ggf. Füllstoffe aufweisen, wie sie vorrangig z.B. als besagte Asphaltmischgüter zur Einbringung für Asphaltstraßen oder sonstige Asphaltbefestigungen verwendet werden.

### Stand der Technik

Ausbauasphalt nimmt weltweit zur Nutzung vorhandener Ressourcen einen immer größeren Stellenwert ein. Grundsätzlich können fast alle Ausbauasphalte besonders für die Herstellung von neuem Asphaltmischgut wiederverwendet werden. Das auch bereits jeweils staatlich sanktionierte Wiederverwendungsgebot wird zwar schon im Baustoff Asphalt inhaltlich umgesetzt, ist aber durchaus verbesserungsbedürftig.

Bei einer jährlichen Asphaltproduktion von ca. 60 Mio. t in Deutschland werden derzeitig ca. 15 Mio. t Ausbauasphalt wieder verwendet. Die Wiederverwendungsquote von Ausbauasphalt könnte jedoch deutlich höher sein.

Es gibt auch schon klare Regularien in den jeweiligen technischen Regelwerken und Merkblättern über die Zugabemengen von Ausbauasphalten in Neumischgütern, die von der Beschaffenheit und Homogenität der Ausbauasphalte abhängig sind.

Damit sind der Zugabe zunächst Grenzen gesetzt. Diese Grenzen sind abhängig von der Beschaffenheit der Ausbauasphalte und von den technischen Möglichkeiten bei der Erwärmung der Asphaltgranulate (d.h. das aufbereitete Material fertiggestellt zur Aufgabe in die Mischanlage). Da die in Asphalten enthaltenen Bindemittel wie Bitumen bei langen Liegezeiten unter Verkehr auch oxydieren und spröde werden (als Alterung benannt), wurde schon vorgegeben, durch Einbindung von geeignetem Frischbitumen in Neumischgut, dieser Alterung entgegenzuwirken. Für die Zugabe von Frischbitumen sind allerdings in den technischen Regelwerken Begrenzungen angegeben, die z.B. die Zugabe eines um eine Stufe weicheren Bitumens ausmachen.

Weiterhin sind bei der Erwärmung der Asphaltgranulate (z.B. in Paralleltrommeln) Grenzen gesetzt. Ausbauasphalt wird in der Regel unter Beachtung der lufttechnischen Umweltvorgaben auf bis zu 130° - 140° C erwärmt. Darüber hinaus kann es mit dem Reinheitsgrad der Abluft am Schornstein der Mischanlage Probleme geben, deren Beseitigung technisch aufwendig ist.

Würde man nun ca. 50 Masse % Ausbauasphalt dem Neumischgut zusetzen, so müssten die neuen Mineralstoffe deutlich über 200° C erwärmt werden. Nur so würde dann die erforderliche Mischguttemperatur von ca. 160 - 180° C erzielt werden. Ohne Zusatz von Ausbauasphalt sind nach dem Stand der Technik nur 180° C für die Erwärmung der Mineralstoffe erforderlich.

Der höheren Wiederverwendungsquote von Ausbauasphalten stellen sich derzeit drei Probleme entgegen:
1. Der Oxydationsgrad (Alterung) des Bitumens im Ausbauasphalt.
2. Die Zusammensetzung (nicht jeder Ausbauasphalt ist derzeitig in jeder Neurezeptur einsetzbar).
3. Für die Erwärmung des Asphaltgranulates müssten neue Erwärmungstechnologien entwickelt werden.

Entsprechend der ausgewerteten Patentliteratur hat sich die einschlägige Fachwelt bisher nur punktuell bzw. nur der Lösung von Teilproblemen der Wiederverwendung von Ausbauasphalten gewidmet. Dabei ging es einerseits entweder um umwelttechnische oder anlagen- wie verfahrenstechnische Probleme und andererseits um Zusammensetzungsanteile und darüber hinaus nur ansatzweise um Maßnahmen, den Ausbauasphalt hinsichtlich einzelner Qualitäten seiner Bestandteile zu verbessern, um ihn wiederverwenden zu können.

Das wird durch die nachstehende Entwicklungschronologie gemäß der ausgewerteten Patentliteratur belegt.

So wird in der DE G 8907 892.6 U1 eine Vorrichtung zur Aufarbeitung von bituminösem Mischgut wie auch Erhitzen von Ausbauasphalt vorgeschlagen, jedoch wird auf Probleme betreffend den Ausbauasphalt noch nicht näher eingegangen.

Gemäß der DE 38 31 870 C1 wird bei der Asphaltherstellung unter Verwendung von granuliertem Ausbauasphalt ein mehrstufiges Verfahren vorgeschlagen, wobei in einem ersten Verfahrensschritt Granulat und Gestein in den Mischer eingegeben werden. Das Verfahren soll die Verwendung eines hohen Anteils von Ausbauasphalt ohne Verpuffung durch Stoßverdampfung sichern.

Zur Minimierung der Abgase aus der thermischen Behandlung hinsichtlich des Kohlenwasserstoffanteils sieht die DE 41 40 964 A1 ein Verfahren zur Herstellung von Asphalt unter Verwendung von Ausbauasphalt vor. Dieser Ausbauasphalt wird vorher in eine grobe und eine feine Fraktion klassifiziert. Zunächst werden nur die Grobanteile thermisch behandelt und die Feinanteile ggf. zusammen mit heißem Bitumen am Ende der thermischen Behandlung zugegeben.

Mehr zur schonenden Erwärmung von Ausbauasphalt bei der Herstellung von Neuasphalt offenbar die DE 43 20 664 A1 mit einem anderen Verfahren, wonach die Behandlung dieses Ausbauasphalts in einer separaten Trommel durch Rauchgase erfolgt.

Des Weiteren lehrt auch die EP 0 216 316 A1 ein Verfahren zur emissionsarmen Aufbereitung eines bituminösen Mischgutes mit hohem Anteil an Granulat als Recycling-Mischgut (Ausbauasphalt). Dabei werden u.a. in einem Mischer die Anteile zunächst vermischt. Der den größten Wärmeinhalt aufweisende Anteil wird durch Abgabe eines Wärmeüberschusses an die anderen Anteile zur Temperaturangleichung genutzt.

In der EP 0 409 097 A1 ist dargelegt, dass zum umweltfreundlichen Recycling von pechhaltigem Ausbauasphalt einer Bitumenemulsion kationische Emulgatoren und Natur-oder Synthesekautschuk oder Kunstharzdispersionen zugesetzt werden.

Auch befasst sich die DE 195 30 164 A1 mit einer Entwicklungsrichtung im Asphaltmischanlagenbau, die zu verarbeitenden und dort so genannten Altasphalte (Ausbauasphalte) zur schonenden umweltfreundlichen und energiesparenden Aufbereitung vorzusehen. Dafür wurde eine im Gegenstrom indirekt beheizte und in Bereiche mit unterschiedlichen Einbauten und Funktionen unterteilte Trockentrommel zur Erwärmung und Trocknung des Asphaltgranulates vorgeschlagen, wodurch Energiebedarf und Abgase reduziert werden und keine Verkrackung des bitumenhaltigen Asphaltgranulates eintritt.

In der EP 1 254 925 A1 analog WO 99/11737 wird u.a. ausgeführt, dass Altasphalte (Ausbauasphalte) einer Mischanlage zugeführt werden, in welcher an sich Neu-Asphalt herkömmlich hergestellt wird. Dazu wird durch Fischer-Tropsch-Synthese gewonnenes Paraffin (FT-Paraffin) in definierten Anteilen zugegeben. Hier soll schon das zugegebene FT-Paraffin (SASOBIT®) funktionell die Widerstandsfähigkeit des als Straßendecke eingebrachten Asphalts erhöhen.

U.a. wird entsprechend der EP 0 558 174 A1 auch die Verjüngung im Sinne einer Regeneration von Ausbauasphalt angesprochen, indem die Zugabe von aus geklärtem Schlamm gewonnenen Öl in Verbindung/Vermischung mit diversen weiteren chemischen Komponenten, wie Stickstoff, Sauerstoff, Schwefel, Wasserstoff und Kohlenstoff in definierten Gewichtsanteilen bestimmt wird.

Des Weiteren soll gemäß der US 5,755,865 die Verjüngung (Regeneration) durch die Verwendung eines Schieferöls bei einer definierten Beimengung erzielt werden. Schieferöle sind jedoch als Aromate umweltschädlich, so dass auch dieses Verfahren nachteilig ist.

Auch die US 5,904,760, US 5,961,709 und 5,911,817 wie die AU 3,828,797 befassen sich mit der Zugabe von Ölen oder anderen Additiven zu herkömmlichen Asphaltmischungen bei Niedrigtemperaturen, um bestimmte Eigenschaften, wie u.a. die Viskosität und Widerstandsfähigkeit zu verändern. Die besonderen und bisher ungelösten Probleme beim Einsatz wiederzuverwendender Ausbauasphalte sind darin weder angesprochen noch Ziel der angebotenen erfinderischen Lösungen.

Es werden weiterhin nach der US 6,117,227, jedoch lediglich im Kaltprozess, Asphalt und Fluxöl verwendet, wobei letzteres ausdrücklich in der kalten Phase die Aggregatumhüllung aus altem Bindemittel penetrieren und schwellen lassen soll, um beim Verdichten den Verbund zu sichern.

Der Einsatz eines Weichmachers analog Fluxöl wurde auch in DE 10 2004 055474 A1 schon offenbart. Die sich daraus ergebende Lehre vermittelt dem Fachmann, von Anfang an von Misch-Temperaturen um >160° C ausgehen zu müssen.

Andererseits befasst sich die US 6,159,279 mit der Doppelumhüllung von begrenzten Anteilen Ausbauasphalt in Mischungen mit einem sehr harten Bindemittel.

Es schließt sich der Kreis der unterschiedlichen Entwicklungsrichtungen aus dem zu berücksichtigenden Stand der Technik mit der US 2004/0146351 A1, in der ein Reparaturmaterial vorgestellt wird, welches auch ein Bindemittel mit Ausbauasphalt umfasst.

Die Zusammenschau des analysierten Standes der Technik zeigt, dass der eingangs herausgearbeitete komplexe und neu zusammengefasste Problemkreis, wie
1. Der Oxydationsgrad (Alterung) des Bitumens im Ausbauasphalt,
2. die Zusammensetzung (nicht jeder Ausbauasphalt ist in jeder Neurezeptur einsetzbar) und
3. der auf 140° C begrenzte Erwärmungsgrad des Asphaltgranulates
bei der Wiederverwendung von Ausbauasphalten und Herstellung von Asphaltheißmischgütem noch nicht in seinen inneren, bisher verborgenen Zusammenhängen gelöst ist.

### Darstellung der Erfindung

Die Erfindung stellt sich die im Ansatz neue Aufgabe, bei der Wiederverwendung von Ausbauasphalten und Herstellung von Asphaltheißmischgütern .
- die Alterung des Bitumens im Ausbauasphalt mittels Zugabe eines neuen Regenerationsmittels auszugleichen,
- die Voraussetzungen zu schaffen, dass nahezu jeder Ausbauasphalt in jeder Neurezeptur der Asphaltmischgüter in Deckschichten, Binderschichten und/oder Tragschichten einsetzbar wird und
- den begrenzten Erwärmungsgrad des Asphaltgranulates ohne zusätzlichen technischen Aufwand einzuhalten.

Dabei soll der Verfahrensprozess mit herkömmlichen Anlagen umweltfreundlich ablaufen und die Wiederverwendungsquote von Ausbauasphalten bei der Herstellung von Asphaltheißmischgütern erhöht und bisher neu eingesetztes Material, wie Mineralien und bindemittel/Bitumen eingespart werden.

Wie eingangs erwähnt, stellen Straßenbefestigungen oder sonstige Befestigungen aus Asphalt qualitativ hochwertige Baustoffe dar, die durch Eigen- und Fremdüberwachung in Ihrer Zusammensetzung und den Einbau güteüberwacht worden sind. Somit stellt eine auszubauende Straße eine Wertstoffressource dar, deren Wiederverwendung nachhaltig Rohstoffe einsparen hilft. Damit ist das folgende wirtschaftliche und ökologische Ziel zu realisieren: Je höher der Anteil der Wiederverwendung von Ausbauasphalt umsetzbar wird, umso höher wird das Einsparpotenzial von Rohstoffen.

Bei der Beurteilung, welcher Anteil an Ausbauasphalt wieder verwendet werden kann, ist u.a. der durch Alterung eingetretene Verhärtungsgrad des Bitumens sorgfältig zu beachten und auszuwerten.

Erfindungsgemäß wird die gestellte Aufgabe mit den Merkmalen der Ansprüche 1 bis 16 gelöst.

Die Erfindung setzt zunächst mit der Maßnahme an, den durch Alterung erhöhten Härtegrad des Bitumens im Ausbauasphalt mit einem Weichmacher einzustellen, um jede gewünschte Eigenschaft von Härtegraden zu erhalten.

Geeignete Weichmacher sind z.B. Fluxöle, auch aus Altölen gewonnen, die aus der Aufbereitung von Motor- oder Industrieölen aus Werkstätten und Tankstellen stammen. Diese Öle werden aus Rohölen gewonnen und können daher einwandfrei wieder mit Bitumen als Rückstand der Erdöldestillation gemischt werden.

Verwendbar wären auch Pflanzenöle oder Frittenöle. Es könnte auch Weichbitumen oder Fluxbitumen zum Einsatz gelangen, welches sonst nicht im Asphaltbau eingesetzt wird.

Erfindungswesentlich ist, dass gemäß dem Anspruch 1 die kombinierte Verwendung eines Systems von einem Weichmacher - wie zuvor beschrieben - und einem Härter - wie nachstehend erläutert - erfolgt. Dieses System Weichmacher-Härter wird einer jeweiligen Mischung mit Ausbauasphalten zugegeben, vorrangig in der Warmphase der Mischung.

Um die erforderliche Einbautemperatur unter umweltfreundlichen Bedingungen zu gestalten, wird dem Ausbauasphalt (Granulat oder Fräsgut) demzufolge kombiniert mit dem z.B. Fluxöl als Weichmacher z.B. ein FT-Paraffin (SASOBIT®) als Härter z.B. in der Warmphase zugegeben.

Hierdurch lassen sich die sonst bei der Verwendung von Ausbauasphalten erforderlichen Einbautemperaturen überraschend von vornherein schon um mindestens 30° C absenken, d.h. von z.B. 170° C auf die an sich bei der Erwärmung von Ausbauasphalten einzuhaltenden bzw. begrenzten 140° C. Es wird somit von Anfang an gar keine höhere Temperatur bei der Herstellung der Mischung benötigt. Zusätzlich wird der Effekt genutzt, dass Asphaltene und chemische Produkte im Bitumen, die sich auch bei der Alterung von Bitumen im Asphalt bilden, besonders gut mit dem FT-Paraffin (SASOBIT®) reagieren.

Grundsätzlich können als Weichmacher aus bei Raumtemperatur flüssige, hochsiedende und mit Bitumen mischbare Stoffe oder Stoffzubereitungen, die einen Flammpunkt (COC) über 120° C aufweisen, und als Härter ein im Gebrauchstemperaturbereich von Asphalt nicht fließfähiges, zäh-elastisches bis springhartes Material verwendet werden, welches Material synthetisch hergestellte Paraffinwachse umfasst.

In weiterer stofflicher Ausbildung der Weichmacher sind höhersiedende Erdölfraktionen, wie Schmierstoff-Grundöle, Nebenprodukte der Schmierölherstellung, bei der Aufarbeitung von Altölen anfallende Flüssigprodukte, native Produkte wie Fette und Öle oder chemisch modifizierte Fette oder Öle pflanzlichen oder tierischen Ursprungs wie Fettsäuremethylester oder auch Mischungen derartiger Stoffe verwendbar.

In stofflicher Ausbildung der Härter nicht gemäß den vorliegenden Ansprünchen sind aus Erdöl abgetrennte Paraffinwachse, fossile Wachse, die aus Kohlen gewonnen werden, rezente Wachse pflanzlichen oder tierischen Ursprungs, hochschmelzende Fette und daraus durch chemische Modifizierung hergestellte Produkte mit wachsartigem Charakter, wie Ester und Amide, synthetisch hergestellte Ester und Amide mit wachsartigen Eigenschaften, thermoplastische Polymere mit geringer mittlerer Molmasse wie Polyolefine, insbesondere Polyethylene, Polyethylen-Copolymere, wie Ethylen-Vinylacetat-Copolymere und Ethylen-Propylen-Copolymere, Phenol-Formaldehyd-Harze, aliphatische, aromatische und gemischte Kohlenwasserstoffharze, wie Styrol-Inden-Harze, rezente Harze wie Kollophoniumharze und deren chemisch modifizierte Varianten, wie Glycerol- und Pentaerythrolester, verwendbar.

So wird ein funktionell verschmolzener Mehrfacheffekt im Sinne einer Kombinationswirkung erzielt: Mit den Ölkomponenten erhält man einen Weichmacher und mit dem z.B. FT-Paraffin (SASOBIT®) einen Härter. Damit sind die Voraussetzungen geschaffen, weitgehend jede gewünschte Eigenschaft der Asphalte durch entsprechende Dosierung der als System zusammenwirkenden Komponenten Weichmacher und Härter einzustellen. Es wird darüber hinaus überraschend möglich, ausschließlich Ausbauasphalt ohne Neu-Mineralstoffe und/oder neuem Bindemittel/Bitumen einsetzen zu können. Ausgeschlossen davon sind selbstverständlich notwendige Additive wie andere Zuschlagstoffe.

Insgesamt werden die so unter Wiederverwendung von Ausbauasphalten hergestellten Asphalte wie Asphaltmischgüter durch die kombinierte Wirkung besagter Komponenten besser verdichtbar und deutlich standfester gegenüber den Verkehrsbelastungen.

Das neuartig kombinierte System aus Weichmacher und Härter, bestehend demnach aus für an sich zwei unterschiedlich wirkenden Komponenten, die sich aber hier in ihrer Wirkung einander unterstützen und im Mischgut zu einem einheitlichen, die gestellte Aufgabe komplex lösendem Effekt verschmelzen, ermöglicht im Vergleich zu bisher bekannten Verfahren die Verwendung mindestens höherer Anteile von Ausbauasphalt bis maximal ausschließlich Ausbauasphalt. Die Herstellung von neuem Asphaltmischgut kann so mit geringeren Erwärmungsgraden und mit verbesserten technischen Eigenschaften für die eingebrachten Asphaltbeläge wie als Asphaltstraßen oder sonstige Asphaltbefestigungen realisiert werden.

Es wurde in diversen Versuchsreichen herausgefunden, dass die erste Komponente, der Weichmacher, als Mittel zur Auffrischung des im Ausbauasphalt enthaltenen Bitumens im Sinne der Herabsetzung der Alterung wirkt und durch Verdunstung und chemische Alterung verlorene Maltenanteile ersetzt. Durch diese Komponente wird das durch die Alterung beeinträchtigte Tieftemperaturverhalten des Bitumens verbessert und die durch Alterung hervorgerufene Versprödung rückgängig gemacht.

Besagte erste Komponente kann deshalb allgemein - wie oben offenbart - aus bei Raumtemperatur flüssigen, hochsiedenden und mit Bitumen mischbaren Stoffen oder Stoffzubereitungen, die einen Flammpunkt (COC) über 120° C aufweisen, bestehen. Wie schon als Fluxöl benannt, können somit höhersiedende Erdölfraktionen, wie z.B. Schmierstoff-Grundöle, Nebenprodukte der Schmierölherstellung, bei der Aufarbeitung von Altölen anfallende Flüssigprodukte aber auch native Produkte wie Fette und Öle oder chemisch modifizierte Fette und Öle pflanzlichen oder tierischen Ursprungs wie z.B. Fettsäuremethylester verwendet werden. Auch Mischungen derartiger Stoffe können eingesetzt werden.

Die zweite Komponente des kombinierten Systems, der Härter, ist ein Mittel, das zum einen die Verarbeitung des Ausbauasphaltes in der Asphaltmischanlage durch Senkung der Viskosität der Asphaltmischung verbessert und zum anderen die Steifigkeit und Verformungsstabilität der hergestellten Asphaltschichten erhöht. Wie schon ausgeführt, ist deshalb diese zweite Komponente ein im Gebrauchstemperaturbereich von Asphalt nicht fließfähiges, zäh-elastisches bis springhartes Material.

Im Temperaturbereich der Herstellung und Verarbeitung von Asphalt liegt diese Komponente im flüssigen Zustand vor, ist mit Bitumen leicht mischbar und weist eine Viskosität auf, die niedriger oder höchstens gleich groß wie die Viskosität typischer bituminöser Bindemittel bei gleicher Temperatur ist. Als zweite Komponente können - wie oben neben FT-Paraffin (SASOBIT®) benannt - synthetisch hergestellte Paraffinwachse oder nicht gemäß den vorliegeden Ansprüchen, aus Erdöl abgetrennte Paraffinwachse, fossile Wachse, die z.B. aus Kohlen gewonnen werden, rezente Wachse pflanzlichen oder tierischen Ursprungs, hochschmelzende Fette und daraus durch chemische Modifizierung hergestellt Produkte mit wachsartigem Charakter, wie z.B. Ester und Amide, synthetisch hergestellte Ester und Amide mit wachsartigen Eigenschaften, themoplastische Polymere mit geringer mittlerer Molmasse wie Polyolefine, insbesondere Polyethylene, Polyethylen-Copolymerer, z.B. Ethylen-Vinylacetat-Copolymere und Ethylen-Propylen-Copolymere, Phenol-Formaldehyd-Harze, aliphatische, aromatische und gemischte Kohlenwasserstoffharze, z.B. Styreol-Inden-Harze, rezente Harze wie Kollophoniumharze und deren chemisch modifizierte Varianten wie z.B. Glycerol- und Pentaerythrolester verwendet werden.

In Abhängigkeit des Verhärtungsgrades, der in der Regel durch den Erweichungspunkt Ring und Kugel (R + K) und auch durch die Penetration bestimmt wird, sollen neben weicheren Bitumensorten auch Fluxbitumen zur Anwendung kommen. Viel einfacher gelingt dies mit Fluxölen, um den eingetretenen Verhärtungsgrad umzukehren.

Ausgeschöpft wird die Erkenntnis, dass besonders geeignet sind in Raffinerien aufbereitete Altöle aus dem Motorenbereich, die in der Regel Flammpunkte > 200 ° C aufweisen und häufig einen nicht unerheblichen Anteil an synthetischen Komponenten beinhalten. Auch in der Fischer Tropsch Synthese werden derartige synthetische Öle gewonnen. Hierbei sollen dem Gesamtbindemittel des eingesetzten Ausbauasphaltes soviel Öl zugegeben werden, dass der Erweichungspunkt R + K des gewünschten Frischbindemittels erzielt wird. Danach soll folgende Beziehung gelten:
1 GT Fluxöl, bezogen auf den Gesamtbindemittelanteil, reduziert den Erweichungspunkt R + K des resultierenden Bindemittel um 1° C.
Als Beispiel wurde errechnet:
   100 M % Ausbauasphalt mit einem Bindemittelanteil von 4,8 M
   % mit einem R + K von 62° C sollen auf einen R + K von 52° C
   eingestellt werden, somit ergeben sich
   62° C
   - 52 °C
   10° C Absenkpotenzial: = 10 GR Fluxöl
   10 GR Fluxöl von 4,8 M % Bitumen = 0,48 % Fluxöl

Z. B. befinden sich in 1.000 kg Ausbauasphalt bei einem Bindemittelanteil von 4,8 M % 48 kg gealtertes Bitumen. 10 GT von 48 kg entsprechen 4.8 kg Fluxöl. Ohne weitere Zuschlagstoffe würde man demnach 1.004,8 kg reaktivierbares Mischgut erhalten.

Als Vorrichtungen für die Erwärmung des ausgebauten Fräsgutes oder Asphaltgranulates haben sich bisher Paralleltrommeln bewährt. Mit diesen Trommeln werden die Ausbauasphalte schonend erwärmt und unter Begrenzung der Emissionen auf ca. 135° C erwärmt. Die Zugabemengen sind in der Regel auf 80 M % begrenzt, da das Neumischgut mit den höher erhitzten Frischmineralstoffen, die auch begrenzt sind, gemischt wird und Einbautemperaturen > 165° C zu erreichen sind. Nur mit diesen Temperaturen konnten bisher die Baustoffe ordnungsgemäß eingebaut und verdichtet werden.

Diese hohen Temperaturen werden nun nach der Erfindung gar nicht erst benötigt, wenn kombiniert zum Weichmacher wie z.B. Fluxöl als Härter und z.B. ein Fischer Tropsch Wax oder ein ähnlicher Stoff wie z.B. SASOBIT® zugegeben wird. Die Einbautemperaturen können so um > 30° C abgesenkt werden.

Einerseits wurde erfindungsgemäß genutzt, dass gefluxte Bitumensorten in damit hergestellten Asphalten ein verbessertes Verdichtungsverhalten beim Einbau aufweisen. Andererseits wurde erfindungsgemäß kombiniert, dass beide Stoffe (Fluxöl und Sasobit) als System von Weichmacher und Härter sich ergänzen können in ihrer Wirkung. Durch das System "Weichmacher und Härter" kann fast jeder gewünschte Härtegrad des Asphaltes zielsicher eingestellt werden. Auch hier gilt in der Regel, die stoffliche Zugabe von 3 % vom Gesamtbindemittel, um einerseits die Wirkung des Weichmachers und andererseits die unterstützende Wirkung des Härters zu erhalten.

Die Vorteile der Erfindung zeigen sich demnach darin, dass
- die Ressource Ausbauasphalt voll nutzbar wird,
- regionale Rezepturen regenerierbar und direkt wieder verwendbar werden,
- die Bewegung von Massengütern reduziert wird,
- erhebliche volkswirtschaftliche Einsparungen bei nahezu 100 %iger Wiederverwendung der Ausbauasphalte möglich werden und
- Mischwerke einfacher gestaltet werden können.

Somit löst die Erfindung überraschend einfach die eingangs dargestellten Probleme und die gestellte technische Aufgabe.

Die Erfindung wird nachstehend an einem Ausführungsbeispiel an Hand von Zeichnungen beschrieben.

### Kurze Beschreibung der Zeichnungen

In den Zeichnungen zeigen
- Fig. 1: ein Fließbildschema mit Anlagenkonfiguration von der Gewinnung des Ausbauasphalts und Erzeugung des Granulats, über die Untersuchung des Granulats im Analytik-Labor und der Erwärmung des Granulats und seiner Verwiegung, der anschließenden Zugabe des kombinierten Systems von Weichmacher und Härter, bis zur Mischung des neuen Asphaltmischgutes und seiner Verladung und schließlich seinem Einbau auf der Baustelle,
- Fig. 2: die untersuchte, grafische Darstellung der Entwicklung der Marshallstabilität und des Fließwertes bei Verwendung des erfindungsgemäßen Systems von Weichmacher und Härter,
- Fig. 3: die untersuchte, grafische Darstellung der Raumdichteentwicklung bei Verwendung des erfindungsgemäßen Systems von Weichmacher und Härter und
- Fig. 4: die untersuchte, grafische Darstellung der Hohlraumentwicklung bei Verwendung des erfindungsgemäßen Systems von Weichmacher und Härter.

### Bester Weg zur Ausführung der Erfindung

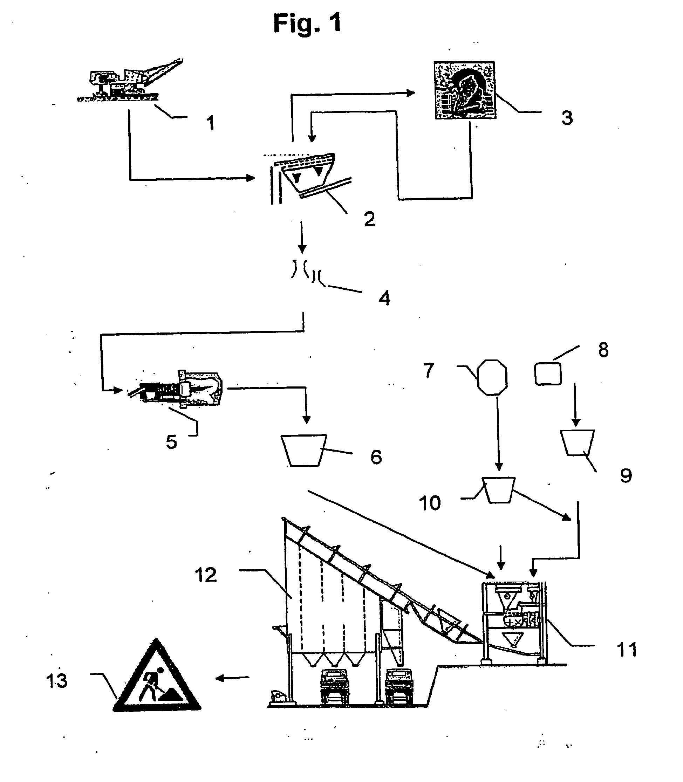

Gemäß Fig. 1 ist als schematisiertes Fließbild eine Anlagenkonfiguration dargestellt, umfassend
- mit 1 bezeichnet, die Gewinnung des Ausbauasphalts mittels Fräse auf der Ausbaustelle einer auszubauenden Asphaltstraße,
- eine Siebanlage 2, auf der der gefräste Ausbauasphalt zur Absiebung der erforderlichen Korngrößen des Granulats aufgegeben wird,
- eine der Siebanlage 2 zugeordnete Brechanlage 3, in der zunächst Übergrößen des Ausbauasphalts und/oder Überkorngrößen in eine brauchbare Stückgröße zerkleinert und dann auf die Siebanlage für die Absiebung aufgegeben werden,
- ein Analytik-Labor 4 zur Untersuchung der Eigenschaften, wie Gesamtbindemittelanteil (Bitumen) und dessen Härtegrad des Granulats, Einstellgrößen für die Zugaben des Systems Weichmacher-Härter und/oder Vorgabe und/oder Kontrolle der technologischen Soll-/Ist-Werte, ggf. mit Verwendung eines rechnergestützten Programms, welches die Funktionen einer Aufnahme, Kontrolle und ggf. Korrektur der technologischen Parameter aus dem gewonnenen und/oder aufbereiteten Ausbauasphalt, eine Analyse des aufbereiteten Granulats zur Einstellung der einzelnen technologischen Vorgagen und/oder eine Kontrolle der erreichten Ist-Werte sichert,
- eine Trommeleinrichtung 5, z.B. auch angeordnet als so genannte Paralleltrommeln, zur Erwärmung des aufbereiteten Granulats mit nachgeordneter und mit 6 bezeichneter Verwiegung des erwärmten Granulats,
- eine Mischanlage 11 zur Herstellung des einzubauenden Asphaltmischgutes, in der
   - das erwärmte und verwogene Granulat und
   - das System Weichmacher-Härter 7, 8 nach dessen mit 9, 10 bezeichneter Verwiegung
   nach den vorgegebenen technologischen Werten gemischt werden und
- eine nachgeordnete Verladeeinrichtung 12 wie Silo zur Verladung des Asphaltmischgutes und Einbau desselben auf einer mit 13 bezeichneten Baustelle für eine neue Asphaltstraße.

In Ausbildung und Weiterentwicklung der technologischen Durchdringung der Erfindung ist es denkbar, dass gemäß den Positionen 1 bis 13 des Fließbildes nach Fig. 1 die technologische Abfolge in einer die Verfahrensschritte nach Anspruch 20 berücksichtigenden, aufeinander abgestimmten Logistikkette realisiert wird. Darüber hinaus kann auch der Gedanke optimal verwirklicht werden, eine auszubauende Asphaltstraße oder sonstige Asphaltbefestigung gemäß besagter Logistikkette unter Beibehaltung der vorhandenen Trasse oder örtlichen Lage, nur zeitversetzt durch den erforderlichen technologischen Ablauf des herzustellenden neuen Asphaltmischgutes, durch das neu einzubringende Asphaltmischgut zu ersetzen.

Mittels dieser, sich aus herkömmlichen Einzelvorrichtungen zusammensetzenden Anlagenkonfiguration ist der Kern der Erfindung, die kombinierte Verwendung eines Systems von einem Weichmacher und einem Härter, die der jeweiligen Mischung mit Ausbauasphalten zugegeben wird, optimal, d.h. ohne neue Vorrichtungen umsetzbar.

Grundsätzlich zeigt Fig. 1 die Zugabe des Systems von Weichmacher und Härter in der Warmphase. Im Sinne der Erfindung kann besagtes System auch vor der Erwärmung (z.B. nach der Analyse des Granulats im Analytik-Labor der herzustellenden Mischung zugegeben werden.

Unter entsprechenden Voraussetzungen des Ausbauasphalts und einer eingehenden Analyse seiner Bestandteile wird es ermöglicht, die neue Asphaltmischung ohne Zugabe von Neu-Mineralien herzustellen.

Wie in der Darstellung der Erfindung schon ausgeführt, ist das System von Weichmacher und Härter stofflich definiert.

Konkret und vorzugsweise werden als Weichmacher ein Fluxöl und als Härter ein FT-Paraffin SASOBIT® verwendet.

Nachfolgendes Beispiel steht entsprechend der erfindungsgemäßen Darstellung für eine, im Rahmen einer entwicklungsmäßigen Untersuchung und für eine gewerbsmäßige bzw. industrielle Anwendung gefundene Verwertung der Erfindung:

Das zur Herstellung des neuen Asphaltmischgutes aufbereitete Ausbauasphaltgranulat wird als 100 M % Ausbauasphalt gesetzt. Es wurde mit einem analysierten Bindemittel-/Bitumenanteil von 4,8 M % bewertet. Diese Masse Bindemittel-/Bitumenanteil besitzt einen Erweichungspunkt nach R + K von 62° C, der auf 52° C eingestellt werden soll. Daraus ergibt sich eine Differenz von 10° C als so bezeichnetes Absenkpotential, was 10 GT Fluxöl entspricht.

Somit ergeben 10 GT Fluxöl von 4,8 M % Bindemittel-/Bitumen einen Bedarf von 0,48 % Fluxöl.

Dabei wurde von der Beziehung ausgegangen, dass 1 GT Fluxöl, bezogen auf den gesamten Bindemittel-/Bitumenanteil den Erweichungspunkt nach R + K des resultierenden Bindemittels-/Bitumens um 1° C senkt.

In 1.000 kg zur Wiederverwendung aufbereiteter Ausbauasphalt befinden sich bei einem Bindemittel-/Bitumenanteil von 4,8 M % somit 48 kg (gealtertes) Bindemittel/Bitumen, was nach der Berechnung 10 GT von 48 kg einen Bedarf von 4,8 kg Fluxöl auf die Masse von 1.000 kg Ausbauasphalt ergibt.

Demnach würde man 1.004,8 kg Mischgut erhalten, welches in diesem Fall einer vollständigen Wiederverwendung des Ausbauasphalts entspricht. Unter der Voraussetzung, dass nach entsprechender qualitativer und quantitativer Analyse des Ausbauasphalts dem so reaktivierten Mischgut keine neuen Mineralien zugegeben werden müssen, können demzufolge in Einsparung dieser neuen Mineralien die Massen von Ausbauasphalten unter Zugabe des Weichmachers zu Massen von neuen Asphaltmischgütern vollständig verwertet werden.

Dieser Teil Weichmacher mit der Wirkung des herabgesetzten Erweichungspunktes von dem erfindungsgemäßen System Weichmacher-Härter wird nun mit dem Teil Härter derart kombiniert, dass mit dem in diesem Fall FT-Paraffin wie SASOBIT® als Härter in herausgefundenen 3 %, d. h. in diesem Fall 1,44 kg, vom gesamten Bindemittel/Bitumen dem Granulat zugesetzt werden.

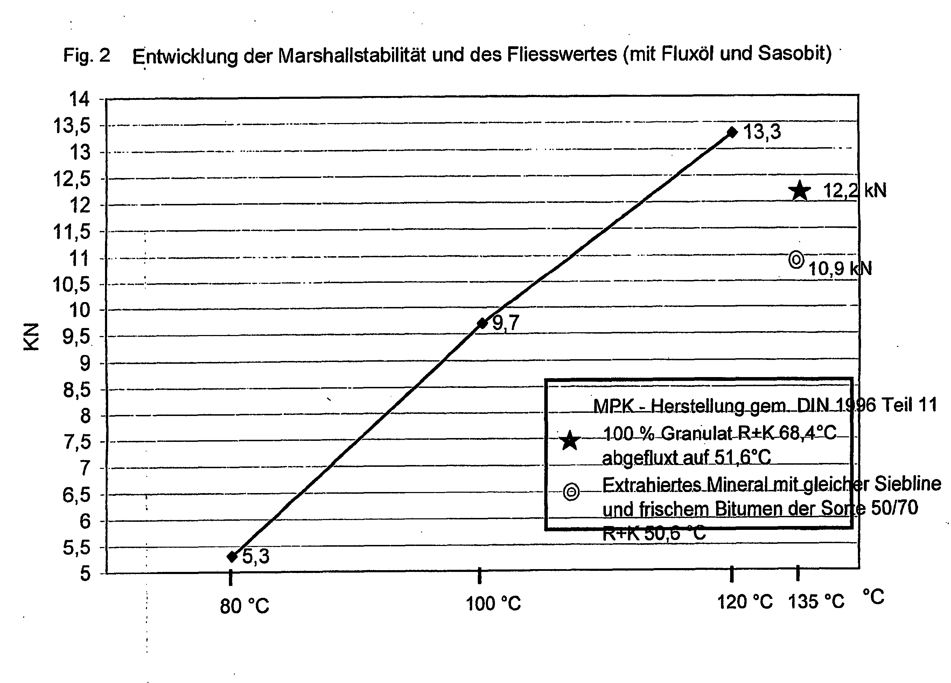

In den Fig. 2 bis 4 sind in Diagrammen die in Anwendung des erfindungsgemäßen Systems Weichmacher-Härter erzielten Entwicklungsergebnisse hinsichtlich
- der verbesserten Marshallstabilität und des Fließwertes,
- der den Normwerten entsprechenden Raumdichte und
- des reduzierten Hohlraums, ebenfalls den Normwerten gerecht werdend,
in den entsprechenden Dimensionen und Werten dargestellt.

Fig. 2 zeigt die Entwicklungslinie der Marshallstabilität und des Fließwertes des erfindungsgemäß mit dem System Weichmacher-Härter hergestellten neuen Asphaltmischgutes aus dem granulierten Ausbauasphalt.

Als Nachweisobjekt dienten Marshallprobekörper (MPK) nach DIN 1996, Teil 11. Als Referenzmischungen des Standes der Technik wurden zugrundegelegt:
1. Es wurden 100 % granulierter Ausbauasphalt mit einem festgestellten Erweichungspunkt des Bindemittel-/Bitumenanteils nach R + K von 68,4° C auf 51,6° C abgefluxt verarbeitet. Der Stabilitätswert beträgt 12,2 KN (markiert mit ★) bei 135° C.
2. Aus Ausbauasphalt extrahierte Mineralien (Gesteine), d.h. der Bindemittel-/Bitumenanteil wurde ausgewaschen, wurden mit frischem Bitumen der Sorte 50/70 verarbeitet, wobei der Erweichungspunkt nach R + K 50,6° C beträgt. Hier wird der Stabilitätswert 10,9 KM (markiert mit 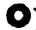 ) bei 135° C erreicht.

Demgegenüber zeigt nach der Untersuchung das erfindungsgemäß hergestellte Mischgut schon bei 120° C Erwärmung einen sogar höheren Stabilitätswert von 13,3 KN.

Allein dieses Diagramm bezeugt den Vorteil eines optimierten Energiebedarfs für die Erwärmung, demzufolge keine zusätzlichen Wärmetechnologien erforderlich sind. Darüber hinaus ist der Gebrauchswert des als Straße oder sonstige Befestigung eingebrachten Mischgutes höher als bisherige Einbauten.

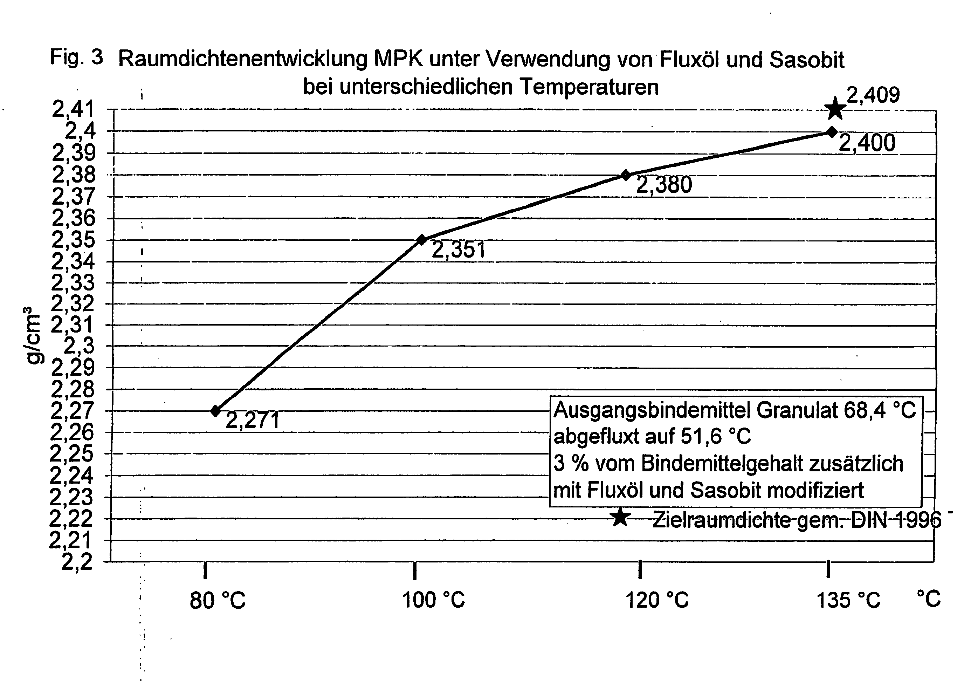

Die Erfindung beweist auch nach der Fig. 3, dass die gemessene Raumdichte mit 2,4 bei 135° C Erwärmung praktisch dem Normwert von 2,409 (mit ★markiert) entspricht, welcher letztere Wert als Zieldichte nach DIN 1996, Teil 11 und Referenz zugrundegelegt wurde.

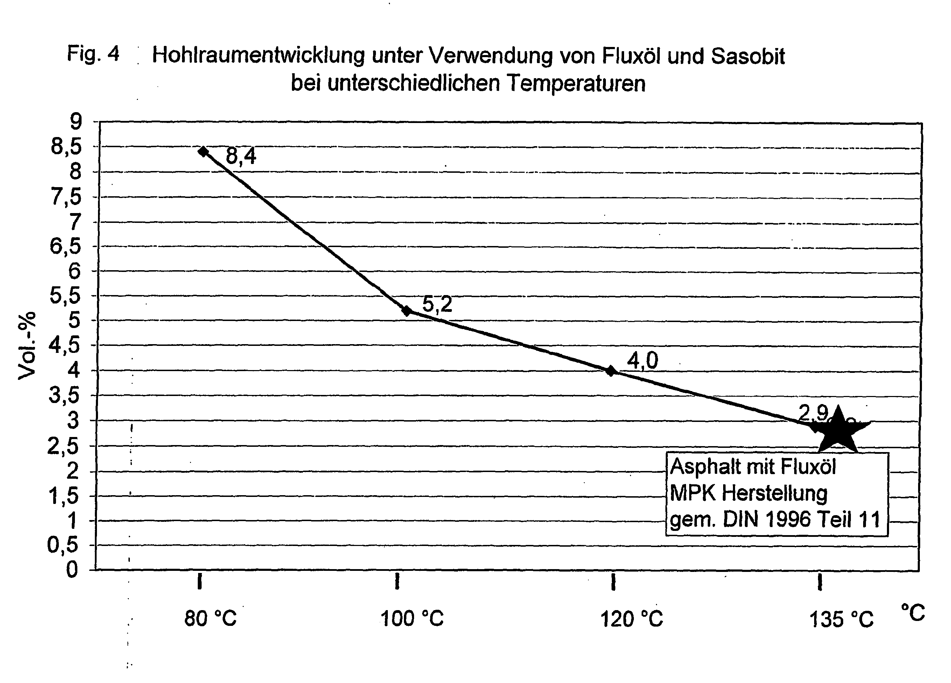

Schließlich ist auch hervorzuheben, dass die erfindungsgemäß gemessene Reduzierung des Hohlraumes gemäß Fig. 4 mit einem Wert von 2,9 Vol. % bei 135° C dem Wert gemäß DIN 1996, Teil 11 ( mit ★ markiert) gerecht wird.

Insgesamt ist damit nachgewiesen, dass die Erfindung nicht nur gewerblich und industriell sowie wirtschaftlich verwertbar ist, sondern darüber hinaus mindestens z.T. höhere Gebrauchseigenschaften eines neu hergestellten Asphaltmischgutes bei voller Ausnutzung der Ressource Ausbauasphalt hervorbringt.

Dabei ist bedeutsam, daß bei entsprechenden Voraussetzungen des Ausbauasphalts und seiner qualitativen sowie quantitativen Analyse Mischungstemperaturen wie Einbautemperaturen ab 60 °C realisierbar sind.

### Gewerbliche Anwendbarkeit

Die Erfindung ist in herkömmlichen Verfahrensabläufen einer Asphaltmischanlage bei der Wiederverwendung von Ausbauasphalt und Herstellung von Asphaltheißmischgütem integrierbar, ohne dass neue Erwärmungstechnologien zur Anwendung gelangen müssen oder Vorrichtungserweiterungen erforderlich werden.

### Bezugszeichenliste

| | |
|---|---|
| 1 = | Gewinnung des Ausbauasphalts mittels Fräse auf der Ausbaustelle einer Asphaltstraße |
| 2 = | Siebanlage für ausgebautes Gut |
| 3 = | Brechanlage zur Erzeugung des Granulats |
| 4 = | Untersuchung des Granulats im Analytik-Labor |
| 5 = | Erwärmung des Granulats in Trommeleinrichtung |
| 6 | = Verwiegung des erwärmten Granulats |
| 7 | = Härterzugabe |
| 8 | = Weichmacherzugabe |
| 9 | = Einrichtung zur Verwiegung des Weichmachers |
| 10 | = Einrichtung zur Verwiegung des Härters |
| 11 | = Mischanlage für Asphaltmischgut |
| 12 | = Verladeeinrichtung wie Silo zur Verladung des Asphaltmischgutes |
| 13 | = Einbau des Asphaltmischgutes in einer Asphaltstraße |
| | |
| GT | = Gewichtsteile |
| M% | = Masse % |
| R + K | = Erweichungspunkt Ring und Kugel |
| MPK | = Marshallprobekörper |
| ★ | = Index für Referenzwert des Standes der Technik (in Fig. 2, 3 und 4) |
| **⊚** | = Index für Referenzwert des Standes der Technik (in Fig. 2) |

## Patentansprüche

1. Verfahren zur Wiederverwendung von Ausbauasphalten und Herstellung von Asphaltmischgütern mittels Zugabe von Stoffen zur Herabsetzung der Alterung des Bitumens im Ausbauasphalt und Begrenzung des Erwärmungsgrades des Asphaltgranulates **gekennzeichnet durch**
a) die kombinierte Verwendung eines Systems von einem¹ Weichmacher und einem Härter, welches System einer jeweiligen Mischung mit Ausbauasphalten vorrangig in der Warmphase zugegeben wird, wobei
- als Weichmacher aus bei Raumtemperatur flüssige, hochsiedende und mit Bitumen mischbare Stoffe oder Stoffzubereitungen, die einen Flammpunkt (COC) über 120 °C aufweisen, verwendet werden und
- als Härter ein im Gebrauchstemperaturbereich von Asphalt nicht fließfähiges, zäh-elastisches bis springhartes Material verwendet wird, welches synthetisch hergestellte Paraffinwachse, umfasst,
b) eine Zugabe zur jeweiligen Mischung mit Ausbauasphalten, die ohne Zugabe von Neu-Mineralien und/oder neuem Bindemittel/Bitumen erfolgen kann, und
c) eine Mischungstemperatur wie Einbautemperatur der Asphaltmischgüter > 60 °C.

2. Verfahren nach Anspruch 1, **dadurch gekennzeichnet, dass** als Weichmacher höhersiedende Erdölfraktionen, ausgewählt aus Schmierstoff-Grundölen, Nebenprodukten der Schmierölherstellung, bei der Aufarbeitung von Altölen anfallenden Flüssigprodukte, native Produkte ausgewählt aus Fetten und Ölen oder chemisch modifizierten Fetten oder Ölen pflanzlichen oder tierischen Ursprungs, ausgewählt aus Fettsäuremethylestern oder auch Mischungen derartiger Stoffe verwendet werden.

3. Verfahren nach Anspruch 1 oder 2, **dadurch gekennzeichnet, dass** als Weichmacher ein Fluxöl wie ein Altöl aus der Aufbereitung von Motor- oder Industrieölen aus Werkstätten und Tankstellen verwendet wird.

4. Verfahren nach einem der Ansprüche 1 bis 3, **dadurch gekennzeichnet, dass** als Härter ein FT-Paraffin verwendet wird.

5. Verfahren nach einem der Ansprüche 1 bis 4, **dadurch gekennzeichnet, dass** je 1.000 kg zur Wiederverwendung aufbereitetes Granulat Ausbauasphalt, welches bei einem ermittelten Bindemittel-/Bitumenanteil von 4.8 M % = 48 kg gealtertes Bindemittel/Bitumen enthält,
a) als Weichmacher wie Fluxöl ca. 4,8 kg und
b) als Härter wie FT-Paraffin ca. 1,6 kg (nach der Regel 3 % vom Bindemittel-/Bitumenanteil plus Weichmacher wie Fluxöl)
zugegeben werden.

6. Verfahren nach einem der Ansprüche 1 bis 5, **dadurch gekennzeichnet, dass** das hergestellte Asphaltmischgut
a) eine Marshallstabilität und einen Fließwert gemäß der Kurve nach Fig. 2 aufweist, wobei schon bei einer Erwärmung auf 120° C ein Wert von 13,3 KN erreicht wird, der deutlich höher gegenüber dem Stabilitätswert von 12,2 KN für ein herkömmliches Standardmischgut mit Ausbauasphalt unter Verwendung von nur einem Weichmacher oder gegenüber dem Stabilitätswert von 10,9 KN für ein Mischgut mit Ausbauasphalt, bei dem die Mineralien extrahiert und mit frischem Bitumen gemischt wurden,
b) eine Raumdichte gemäß der Kurve nach Fig. 3 aufweist, wobei bei einer Erwärmung auf 135° C ein Wert von 2,4 g/cm³ vergleichbar dem entsprechenden Normwert von 2,409 g/cm³, erreicht wird und/oder
b) eine Hohlraumreduzierung gemäß der Kurve nach Fig. 4 aufweist, wobei bei einer Erwärmung auf 135° C ein Wert von 2,9 Vol. %, vergleichbar dem herkömmlichen Normwert erreicht wird.

7. Verfahren nach einem der Ansprüche 1 bis 6, **dadurch gekennzeichnet, dass** dem aufbereiteten Asphaltgranulat vor der Erwärmung der Weichmacher zugegeben wird.

8. Verfahren nach einem der Ansprüche 1 bis 7, **dadurch gekennzeichnet, dass** dem aufbereiteten Altasphaltgranulat vor der Erwärmung der Härter zugegeben wird.

9. Verfahren nach einem der Ansprüche 1 bis 8, **dadurch gekennzeichnet, dass** der Härter in Form von den Härter aufnehmenden faserartigen Füllstoffen dem Asphaltgranulat zugegeben wird.

10. Verfahren nach einem der Ansprüche 1 bis 9, **dadurch gekennzeichnet, dass** der Härter in Form von verpressten Pellets zugegeben wird, welche Pellets die faserartigen Füllstoffe und den Härter umfassen.

11. Verfahren nach einem der Ansprüche 1 bis 10, **gekennzeichnet durch** die Verwendung einer Anlagenkonfiguration für das herzustellende Asphaltmischgut, welche aufweist
a) eine Vorrichtung wie Fräse (1) zur Gewinnung des Ausbauasphalts,
b) eine Siebanlage (2) für die Absiebung der erforderlichen Korngrößen aus dem Ausbauasphalt,
c) eine Trommeleinrichtung (5) für die Erwärmung des Ausbauasphalts,
d) einen Mischer (11) zum Mischen des Asphaltmischgutes und
c) eine Verladeeinrichtung zur Verladung des Asphaltmischgutes.

12. Verfahren nach einem der Ansprüche 1 bis 11, **gekennzeichnet durch** die Verwendung einer Brechanlage (3), welche der Siebanlage (2) zugeordnet ist.

13. Verfahren nach einem der Ansprüche 1 bis 12, **gekennzeichnet durch** die Verwendung einer Einrichtung als Analytik-Labor (4).

14. Verfahren nach einem der Ansprüche 1 bis 13, **gekennzeichnet durch** die Verwendung einer Einrichtung (9, 10) zur Verwiegung des Weichmachers und/oder Härters.

15. Verfahren nach einem der Ansprüche 1 bis 14 , **gekennzeichnet durch** eine Logistikkette mit den Verfahrensschritten
a) Gewinnung und/oder Aufbereitung des Ausbauasphalts als Granulat für die Wiederverwendung.
b) Analyse des aufbereiteten Granulats zur Ermittlung der technologischen Soll-Vorgaben für die Erwärmung, Verwiegung, Zugaben des Systems Weichmacher-Härter und/oder der Mischungsbestandteile des herzustellenden Asphaltmischgutes und/oder
c) ggf. Kontrolle der erreichten Ist-Werte des hergestellten Asphaltmischgutes.

16. Verfahren nach einem der Ansprüche 1 bis 15, **gekennzeichnet durch** die Verwendung eines rechnergestützten Programms, welches die Funktionen einer Aufnahme der technologischen Parameter, ihrer Kontrolle und ggf. Korrektur gemäß den vorstehenden Verfahrensschritten a), b) und/oder c) aufweist.

## Claims

1. A method for reusing removed asphalts and producing asphalt bituminous mixtures by adding substances for reducing the ageing of the bitumen in the removed asphalt and limiting the degree of heating of the asphalt granulate, **characterised by**
a) the combined use of a system of a softener and a hardener, which system is added in advance to a respective mixture with removed asphalts in the hot phase, wherein
- softeners made up of high-boiling substances or substance preparations which can be mixed with bitumen, are liquid at room temperature and have a flash point (COC) above 120°C are used as softeners and
- a tough-elastic to spring-hard material which is non-flowable in the service temperature range and comprises synthetically produced paraffin waxes is used as hardener,
b) an addition to the respective mixture with removed asphalts can take place without adding new minerals and/or new binding agent/bitumen, and
c) a mixing temperature like the integration temperature of the asphalt bituminous mixtures >60°C.

2. The method according to Claim 1, **characterised in that** higher-boiling mineral-oil fractions, chosen from lubricant base oils, by-products of lubricating oil production, liquid products accumulating during the reprocessing of waste oils, native products chosen from greases and oils or chemically modified greases or oils of plant or animal origin selected from fatty acid methyl esters or else mixtures of such substances are used as softeners.

3. The method according to Claim 1 or 2, **characterised in that** a flux oil, such as a waste oil from reprocessing of engine or industrial oils from workshops and service stations is used as softener.

4. The method according to one of Claims 1 to 3, **characterised in that** an FT paraffin is used as hardener.

5. The method according to one of Claims 1 to 4, **characterised in that** each 1,000 kg granulate of removed asphalt prepared for reuse, at a resultant binding agent/bitumen content of 4.8 M% = 48 kg of aged binding agent/bitumen, contains
a) approx. 4.8 kg as softeners such as flux oil and
b) approx. 1.6 kg (generally 3% of binding agent/bitumen content plus softeners like flux oil) are added as hardeners such as FT paraffin.

6. The method according to one of Claims 1 to 5, **characterised in that** the asphalt bituminous mixture produced
a) has a Marshall stability and a flow value according to the curve according to Fig. 2, wherein even in the case of heating to 120°C, a value of 13.3 kN is achieved, which is clearly higher compared to the stability value of 12.2 kN for a conventional standard bituminous mixture with removed asphalt using only one softener or compared to a stability value of 10.9 kN for a bituminous mixture with removed asphalt in which the minerals have been extracted and mixed with fresh bitumen,
b) has a density by volume according to the curve according to Fig. 3, wherein in the case of heating to 135°C, a value of 2.4 g/cm³ comparable to the corresponding standard value of 2.409 g/cm³ is achieved and/or
c) has a cavity reduction according to the curve according to Fig. 4, wherein in the case of heating to 135°C, a value of 2.9% by volume comparable to the conventional standard value is achieved.

7. The method according to one of Claims 1 to 6, **characterised in that** the softener is added to the prepared asphalt granulate before the heating.

8. The method according to one of Claims 1 to 7, **characterised in that** the hardener is added to the prepared waste-asphalt granulate before the heating.

9. The method according to one of Claims 1 to 8, **characterised in that** the hardener is added to the asphalt granulate in the form of fibrous fillers accommodating the hardener.

10. The method according to one of Claims 1 to 9, **characterised in that** the hardener is added in the form of compressed pellets, which pellets comprise the fibrous fillers and the hardener.

11. The method according to one of Claims 1 to 10, **characterised by** the use of a plant configuration for the asphalt bituminous mixture to be produced, which has
a) a device such as a milling machine (1) for obtaining the removed asphalt,
b) a sieving plant (2) for sieving the required particle sizes from the removed asphalt,
c) a drum apparatus (5) for heating the removed asphalt,
d) a mixer (11) for mixing the asphalt bituminous mixture and
e) a loading apparatus for loading the asphalt bituminous mixture.

12. The method according to one of Claims 1 to 11, **characterised by** the use of a crushing machine (3) which is assigned to the sieving plant (2).

13. The method according to one of Claims 1 to 12, **characterised by** the use of an apparatus as an analytical laboratory (4).

14. The method according to one of Claims 1 to 13, **characterised by** the use of an apparatus (9, 10) for weighing the softener and/or hardener.

15. The method according to one of Claims 1 to 14, **characterised by** a logistic chain with the method steps
a) obtaining and/or preparing the waste asphalt as a granulate for reuse,
b) analysing the prepared granulate for obtaining the technological setpoint specifications for heating, weighing, adding the softener/hardener system and/or the mixture constituents of the asphalt bituminous mixtures to be produced and/or
c) if appropriate, checking the achieved actual values of the asphalt bituminous mixture produced.

16. The method according to one of Claims 1 to 15, **characterised by** the use of a computer-assisted program which has the functions of receiving the technological parameters and checking and if appropriate correcting the same in accordance with the preceding method steps a), b) and/or c).

## Revendications

1. Procédé destiné à la réutilisation d'asphaltes de démolition et à la production de produits mixtes à base d'asphalte par ajout de matières pour diminuer le vieillissement du bitume dans l'asphalte de démolition et par limitation du degré d'échauffement des granulés d'asphalte, **caractérisé par**
a) l'utilisation associée d'un système d'un plastifiant et d'un durcisseur, lequel système est ajouté à un mélange respectif contenant des asphaltes de démolition, prioritairement dans la phase chaude,
- étant utilisées en tant que plastifiants des matières ou préparations de matières liquides à température ambiante, à haut point d'ébullition et susceptibles d'être mélangées au bitume, présentant un point d'éclair (COC) supérieur à 120°C et
- étant utilisé en tant que durcissant un matériau non coulant dans l'ordre des températures d'utilisation de l'asphalte, viscoplastique à fissible, lequel comprend des cires de paraffine de fabrication synthétique,
b) un ajout au mélange concerné contenant des asphaltes de démolition pouvant s'effectuer sans ajout de minéraux neufs et/ou d'agent de liaison/de bitume neuf et
c) une température de mélange identique à la température d'incorporation des produits mélangés à base d'asphalte > 60 °C.

2. Procédé selon la revendication 1, **caractérisé en ce qu'**en tant que plastifiants, on utilise des fractions de pétrole brut à point d'ébullition plus élevé, choisies parmi les huiles de base pour huiles lubrifiantes, des sous-produits de la fabrication d'huiles lubrifiantes, des produits liquides issus du recyclage d'huiles usées, des produits natifs choisis parmi les graisses et les huiles ou des graisses ou huiles d'origine végétale ou animale chimiquement modifiées choisies parmi l'ester méthylique d'acides gras ou également des mélanges de matières de ce type.

3. Procédé selon la revendication 1 ou la revendication 2, **caractérisé en ce qu'**on utilise en tant que plastifiant une huile de fluxage telle qu'une huile usée issue du recyclage d'huiles de moteur ou d'huiles industrielles sortant d'ateliers ou de stations service.

4. Procédé selon l'une quelconque des revendications 1 à 3, **caractérisé en ce qu'**on utilise en tant que durcisseur une paraffine FT.

5. Procédé selon l'une quelconque des revendications 1 à 4, **caractérisé en ce qu'**on ajoute à chaque fois 1.000 kg pour la réutilisation de granulés d'asphalte de démolition traités, qui pour une part déterminée d'agent de liaison/de bitume de 45.8 M % contiennent = 48 kg d'agent de liaison/de bitume vieilli,
a) en tant que plastifiant comme l'huile de fluxage, environ 4,8 kg et
b) en tant que durcisseur comme la paraffine FT environ 1,6 kg (selon la règle 3 % de la part d'agent de liaison/de bitume plus le plastifiant comme l'huile de fluxage).

6. Procédé selon l'une quelconque des revendications 1 à 5, **caractérisé en ce que** le produit mélangé à base d'asphalte
a) présente une stabilité de Marshall et une valeur de fluage selon la courbe d'après la figure 2, dès un échauffement à 120°C, une valeur de 13,3 KN étant atteinte qui est nettement supérieure à la valeur de stabilité de 12,2 KN pour un produit mélangé standard habituel avec de l'asphalte de démolition par utilisation d'un seul plastifiant ou à la valeur de stabilité de 10,9 KN pour un produit mélangé avec de l'asphalte de démolition pour lequel les minéraux ont été extraits et mélangés à du bitume frais,
b) présente une densité en volume selon la courbe d'après la figure 3, lors d'un échauffement à 135°c, une valeur de 2,4 g/cm³, comparable à la valeur normalisée de 2,409 g/cm³ étant atteinte et/ou
c) présente une réduction de cavité selon la courbe d'après la figure 4, lors d'un échauffement à 135°C, une valeur de 2,9 % en volume, comparable à la valeur norminative habituelle étant atteinte.

7. Procédé selon l'une quelconque des revendications 1 à 6, **caractérisé en ce qu'**on ajoute le plastifiant aux granulés d'asphalte traités avant leur échauffement.

8. Procédé selon l'une quelconque des revendications 1 à 7, **caractérisé en ce qu'**on ajoute le durcisseur aux granulés d'asphalte traités avant leur échauffement.

9. Procédé selon l'une quelconque des revendications 1 à 8, **caractérisé en ce qu'**on ajoute le durcisseur aux granulés d'asphalte sous la forme d'agents de charge fibreux absorbant le durcisseur.

10. Procédé selon l'une quelconque des revendications 1 à 9, **caractérisé en ce qu'**on ajoute le durcisseur sous la forme de pellets pressés, lesquels pellets comprennent les matières de charge fibreuses et le durcisseur.

11. Procédé selon l'une quelconque des revendications 1 à 10, **caractérisé par** l'utilisation pour le produit mélangé à base d'asphalte qui doit être fabriqué d'une installation de configuration présentant
a) un dispositif tel qu'une fraiseuse (1) pour récupérer l'asphalte de démolition,
b) un système de tamisage (2) pour tamiser la grosseur de grains requise à partir de l'asphalte de démolition,
c) un système à tambour (5) pour échauffer l'asphalte de démolition,
d) un malaxeur (11) pour mélanger le produit mixte à base d'asphalte et
e) un système de chargement pour charger le produit mixte à base d'asphalte.

12. Procédé selon l'une quelconque des revendications 1 à 11, **caractérisé par** l'utilisation d'une installation de concassage (3) qui est associée au tamiseur (2).

13. Procédé selon l'une quelconque des revendications 1 à 12, **caractérisé par** l'utilisation d'une installation en tant que laboratoire d'analyse (4).

14. Procédé selon l'une quelconque des revendications 1 à 13, **caractérisé par** l'utilisation d'une installation (9, 10) pour peser le plastifiant et/ou le durcisseur.

15. Procédé selon l'une quelconque des revendications 1 à 14, **caractérisé par** une chaîne logistique avec les étapes de procédé
a) récupération et/ou traitement de l'asphalte de démolition en tant que granulés pour être réutilisé,
b) analyse des granulés traités pour déterminer les prescriptions technologiques de consigne pour l'échauffement, le pesage, l'addition du système plastifiant/durcisseur et/ou des composants du mélange du produit mixte à base d'asphalte devant être fabriqué et/ou
c) le cas échéant, contrôle des valeurs réelles obtenues pour le produit mixte à base d'asphalte fabriqué.

16. Procédé selon l'une quelconque des revendications 1 à 15, **caractérisé par** l'utilisation d'un programme assisté par ordinateur, lequel présente les fonctions d'un enregistrement des paramètres technologiques, de leur contrôle et le cas échéant de leur correction selon les étapes de procédé a), b) et/ou c) précédentes.
